# EUROPEAN PATENT APPLICATION

(11) **EP 3 209 058 A1**
(43) Date of publication of application: **23.08.2017**
(21) Application number: 14905940.4
(22) Date of filing: 12.11.2014
(51) Int. Cl.: H04W 28/10

(54) **METHOD, APPARATUS AND SYSTEM FOR IDENTIFYING TERMINAL USERS**

(71) Applicant: Huawei Technologies Co., Ltd., Longgang District Shenzhen, Guangdong 518129 (CN)
(72) Inventor: LI, Xiaoyan, Shenzhen Guangdong 518129 (CN); YANG, Zhengjie, Shenzhen Guangdong 518129 (CN)
(74) Representative: Epping - Hermann - Fischer
(86) International application number: PCT/CN2014/090929
(87) International publication number: WO 2016/074175

(57) **Abstract**

Embodiments of the present invention provide a method, a device, and a system for identifying a terminal user. The method includes: acquiring camping time of a terminal on a first cell of a dedicated network, where the first cell is any cell in the dedicated network; determining a user type of the terminal according to the camping time, where the user type of the terminal is a user of the dedicated network or a user of a public network, the dedicated network is a network that covers a high-speed railway area, the public network is a network that covers an area outside the high-speed railway area, the user of the dedicated network is a user that is on a high-speed train, and the user of the public network is a user that is not on a high-speed train. Determining a user type of a terminal by using camping time does not need to depend on a report from a base station, and may determine in time whether the terminal is a user of the public network. Therefore, a network congestion problem of the dedicated network is resolved in time.

## Description

### TECHNICAL FIELD

Embodiments of the present invention relate to the field of communications technologies, and in particular, to a method, a device, and a system for identifying a terminal user.

### BACKGROUND

In a high-speed railway scenario, because a train is running at a high speed, and terminal users on the train are centralized, instantaneous traffic of the terminal users is heavy. In order to ensure relatively good communication experience for a passenger in the high-speed train, technologies such as a multi-RRU cell technology are generally used to build a chain-type communications network that covers a high-speed railway, that is, a high-speed railway dedicated network, dedicated network for short. The high-speed railway dedicated network has no mutual neighboring relationship with a public network except for specific cells such as a railway station, and a terminal user cannot re-select or be handed over between the two networks, that is, in principle, only a passenger in a high-speed train is allowed to occupy high-speed railway dedicated network resources.

Because a coverage distance of the high-speed railway dedicated network is long (for example, three to six kilometers), and a signal in an area covered by the dedicated network is strong, if a population along and surround the railway (for example, in an urban area or a developed area) is relatively large, a mobile phone of a user of a public network, that is, a network that covers an area outside a high-speed railway area, public network for short, reselects a network due to reasons such as power-on, disconnection from a network, a problematic terminal, and interference at a BCCH frequency, and many users of the public network camp on a cell of the high-speed railway dedicated network and occupy resources of the cell of the high-speed railway dedicated network; therefore, dedicated network congestion is caused, and a basic communications requirement of a passenger who is in a high-speed train and camps on the high-speed railway dedicated network is affected.

In the prior art, a moving speed of a terminal is used to determine whether a user of the terminal is a user of a public network or a user of a dedicated network, so as to resolve a problem of dedicated network congestion. However, acquiring the moving speed of the terminal depends on a frequency offset result reported by a base station. If the base station does not report the frequency offset result, the moving speed of the terminal cannot be acquired. Therefore, a user of a public network cannot be identified.

### SUMMARY

Embodiments of the present invention provide a method, a device, and a system for identifying a terminal user, which may determine in time whether a terminal is a user of a public network with no need to rely on a base station.

According to a first aspect, an embodiment of the present invention provides a network device, including: an acquiring unit, configured to acquire camping time of a terminal on a first cell of a dedicated network, where the first cell is any cell in the dedicated network; and a processing unit, configured to determine a user type of the terminal according to the camping time, where the user type of the terminal is a user of the dedicated network or a user of a public network, the dedicated network is a network that covers a high-speed railway area, the public network is a network that covers an area outside the high-speed railway area, the user of the dedicated network is a user that is on a high-speed train, and the user of the public network is a user that is not on a high-speed train.

In a first possible implementation manner of the first aspect, the processing unit is specifically configured to: when the camping time is less than preset time, determine that a user of the terminal is a user of the dedicated network; or
when the camping time is greater than or equal to the preset time, determine that a user of the terminal is a user of the public network.

With reference to the first possible implementation manner of the first aspect, in a second possible implementation manner of the first aspect, the processing unit is further configured to hand over the terminal out of the first cell when determining that the user of the terminal is a user of the public network.

With reference to the first aspect, the first possible implementation manner of the first aspect, or the second possible implementation manner of the first aspect, in a third possible implementation manner of the first aspect, the acquiring unit is further configured to: before acquiring the camping time of the terminal on the first cell of the dedicated network, acquire a first time point at which the terminal performs the first service interaction with the dedicated network in the first cell; and acquire a second time point at which the terminal performs a current service interaction with the dedicated network; and
that an acquiring unit, configured to acquire camping time of a terminal in a first cell of a dedicated network includes that the acquiring unit is specifically configured to use a time difference between the second time point and the first time point as the camping time.

With reference to the third possible implementation manner of the first aspect, in a fourth possible implementation manner of the first aspect, the acquiring unit is further configured to: before acquiring the camping time of the terminal on the first cell of the dedicated network, acquire a first identifier of the first cell when the terminal performs the first service interaction with the dedicated network in the first cell; and acquire a second identifier of a cell in which the terminal performs the current service interaction with the dedicated network; and
that an acquiring unit, configured to acquire camping time of a terminal in a first cell of a dedicated network includes that the acquiring unit is specifically configured to acquire the camping time of the terminal on the first cell when the first identifier and the second identifier are the same.

With reference to the fourth possible implementation manner of the first aspect, in a fifth possible implementation manner of the first aspect, the processing unit is further configured to: when it is determined that the first identifier and the second identifier are different, determine that the user of the terminal is a user of the dedicated network.

With reference to the fifth possible implementation manner of the first aspect, in a sixth possible implementation manner of the first aspect, the processing unit is further configured to: after determining that the user of the terminal is a user of the dedicated network, use a time at which the terminal performs the current service interaction with the dedicated network as a time at which the terminal performs the first service interaction with the dedicated network in a cell corresponding to the second identifier.

With reference to any one of the third to the sixth possible implementation manners of the first aspect, in a seventh possible implementation manner of the first aspect, when a service is a packet switched (Packet Switching, PS for short) service, a time at which the service interaction is performed is a time at which the PS service is started; and when the service is a circuit switched (Circuit Switch, CS for short) service, the time at which the service interaction is performed is a time at which the CS service is finished.

With reference to the seventh possible implementation manner of the first aspect, in an eighth possible implementation manner of the first aspect, the CS service is a location update service, a short message service, a called service, or a calling service.

According to a second aspect, an embodiment of the present invention provides a method for identifying a terminal user, including: acquiring camping time of a terminal on a first cell of a dedicated network, where the first cell is any cell in the dedicated network; determining a user type of the terminal according to the camping time, where the user type of the terminal is a user of the dedicated network or a user of a public network, the dedicated network is a network that covers a high-speed railway area, the public network is a network that covers an area outside the high-speed railway area, the user of the dedicated network is a user that is on a high-speed train, and the user of the public network is a user that is not on a high-speed train.

In a first possible implementation manner of the second aspect, the determining a user type of the terminal according to the camping time includes: when the camping time is less than preset time, determining that a user of the terminal is a user of the dedicated network; or when the camping time is greater than or equal to the preset time, determining that a user of the terminal is a user of the public network.

With reference to the first possible implementation manner of the second aspect, in a second possible implementation manner of the second aspect, the method further includes: handing over the terminal out of the first cell when the user of the terminal is a user of the public network.

With reference to the second aspect, the first possible implementation manner of the second aspect, or the second possible implementation manner of the second aspect, in a third possible implementation manner of the second aspect, before the acquiring camping time of a terminal on a first cell of a dedicated network, the method further includes: acquiring a first time point at which the terminal performs the first service interaction with the dedicated network in the first cell; and acquiring a second time point at which the terminal performs a current service interaction with the dedicated network; and
the acquiring camping time of a terminal on a first cell of a dedicated network includes: using a time difference between the second time point and the first time point as the camping time.

With reference to the third possible implementation manner of the second aspect, in a fourth possible implementation manner of the second aspect, before the acquiring camping time of a terminal on a first cell of a dedicated network, the method further includes: acquiring a first identifier of the first cell when the terminal performs the first service interaction with the dedicated network in the first cell; and acquiring a second identifier of a cell in which the terminal performs the current service interaction with the dedicated network; and
the acquiring camping time of a terminal on a first cell of a dedicated network includes: acquiring the camping time of the terminal on the first cell when the first identifier and the second identifier are the same.

With reference to the fourth possible implementation manner of the second aspect, in a fifth possible implementation manner of the second aspect, the method further includes:
when the first identifier and the second identifier are different, determining that the user of the terminal is a user of the dedicated network.

With reference to the fifth possible implementation manner of the second aspect, in a sixth possible implementation manner of the second aspect, after the determining that the user of the terminal is a user of the dedicated network, the method further includes:
using a time at which the terminal performs the current service interaction with the dedicated network as a time at which the terminal performs the first service interaction with the dedicated network in a cell corresponding to the second identifier.

With reference to any one of the third to the sixth possible implementation manners of the second aspect, in a seventh possible implementation manner of the second aspect, when s service is a PS service, a time at which the service interaction is performed is a time at which the PS service is started; and
when the service is a CS service, the time at which the service interaction is performed is a time at which the CS service is finished.

With reference to the seventh possible implementation manner of the second aspect, in an eighth possible implementation manner of the second aspect, the CS service is a location update service, a short message service, a called service, or a calling service.

According to a third aspect, an embodiment of the present invention provides a system for identifying a terminal user, including: the network device provided in the first aspect of the present invention or any possible implementation manner of the first aspect and at least one terminal, where the network device communicates with and connects to the at least one terminal.

According to the method, the device, and the system for identifying a terminal user provided in the embodiments of the present invention, camping time of a terminal on a first cell of a dedicated network is acquired, where the first cell is any cell in the dedicated network, and then it is determined, according to the camping time, whether a user type of the terminal is a user of the dedicated network or a user of a public network. Determining a user type of a terminal by using camping time does not need to depend on a report from a base station, and may determine in time whether the terminal is a user of the public network. Therefore, a network congestion problem of the dedicated network is resolved in time.

### BRIEF DESCRIPTION OF DRAWINGS

To describe the technical solutions in the embodiments of the present invention or in the prior art more clearly, the following briefly introduces the accompanying drawings required for describing the embodiments or the prior art. Apparently, the accompanying drawings in the following description show some embodiments of the present invention, and persons of ordinary skill in the art may still derive other drawings from these accompanying drawings without creative efforts.
FIG. 1 is a schematic structural diagram of Embodiment 1 of a network device according to the present invention;
FIG. 2 is a schematic structural diagram of Embodiment 2 of a network device according to the present invention;
FIG. 3 is a flowchart of Embodiment 1 of a method for identifying a terminal user according to the present invention;
FIG. 4 is a flowchart of Embodiment 2 of a method for identifying a terminal user according to the present invention;
FIG. 5 is an application scenario diagram of a method for identifying a terminal user according to the present invention;
FIG. 6 is a flowchart of Embodiment 3 of a method for identifying a terminal user according to the present invention;
FIG. 7 is a flowchart of Embodiment 4 of a method for identifying a terminal user according to the present invention; and
FIG. 8 is a schematic structural diagram of an embodiment of a system for identifying a terminal user according to the present invention.

### DESCRIPTION OF EMBODIMENTS

To make the objectives, technical solutions, and advantages of the embodiments of the present invention clearer, the following clearly and completely describes the technical solutions in the embodiments of the present invention with reference to the accompanying drawings in the embodiments of the present invention. Apparently, the described embodiments are some but not all of the embodiments of the present invention. All other embodiments obtained by persons of ordinary skill in the art based on the embodiments of the present invention without creative efforts shall fall within the protection scope of the present invention.

A network device involved in the present invention may be a base station controller (Base Station Controller, BSC for short).

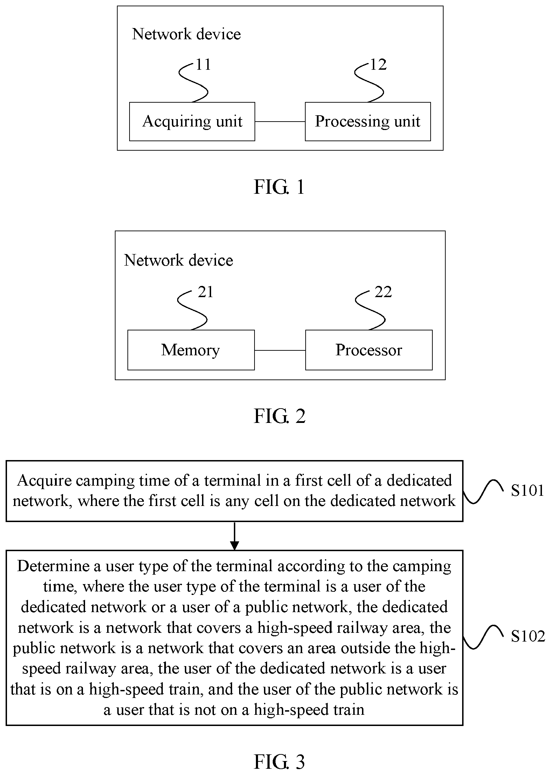

FIG. 1 is a schematic structural diagram of Embodiment 1 of a network device according to the present invention. As shown in FIG. 1, the network device of this embodiment may include an acquiring unit 11 and a processing unit 12. The acquiring unit 11 is configured to acquire camping time of a terminal on a first cell of a dedicated network, where the first cell is any cell in the dedicated network. The processing unit 12 is configured to determine a user type of the terminal according to the camping time, where the user type of the terminal is a user of the dedicated network or a user of a public network, the dedicated network is a network that covers a high-speed railway area, the public network is a network that covers an area outside the high-speed railway area, the user of the dedicated network is a user that is on a high-speed train, and the user of the public network is a user that is not on a high-speed train.

Optionally, the processing unit 12 is specifically configured to: when the camping time is less than preset time, determine that a user of the terminal is a user of the dedicated network; or when the camping time is greater than or equal to the preset time, determine that a user of the terminal is a user of the public network.

Optionally, the processing unit 12 is further configured to hand over the terminal out of the first cell when determining that the user of the terminal is a user of the public network.

Optionally, the acquiring unit 11 is further configured to: before acquiring the camping time of the terminal on the first cell of the dedicated network, acquire a first time point at which the terminal performs the first service interaction with the dedicated network in the first cell; and acquire a second time point at which the terminal performs a current service interaction with the dedicated network.

That the acquiring unit 11 is configured to acquire the camping time of the terminal on the first cell of the dedicated network includes that the acquiring unit 11 is specifically configured to use a time difference between the second time point and the first time point as the camping time.

Optionally, the acquiring unit 11 is further configured to: before acquiring the camping time of the terminal on the first cell of the dedicated network, acquire a first identifier of the first cell when the terminal performs the first service interaction with the dedicated network in the first cell; and acquire a second identifier of a cell in which the terminal performs the current service interaction with the dedicated network.

That the acquiring unit 11 is configured to acquire the camping time of the terminal on the first cell of the dedicated network includes that the acquiring unit 11 is specifically configured to acquire the camping time of the terminal on the first cell when the first identifier and the second identifier are the same.

Optionally, the processing unit 12 is further configured to: when the first identifier and the second identifier are different, determine that the user of the terminal is a user of the dedicated network.

Optionally, the processing unit 12 is further configured to: after determining that the user of the terminal is a user of the dedicated network, use a time at which the terminal performs the current service interaction with the dedicated network as a time at which the terminal performs the first service interaction with the dedicated network in a cell corresponding to the second identifier.

Optionally, when a service is a PS service, a time at which the service interaction is performed is a time at which the PS service is started; and when the service is a CS service, the time at which the service interaction is performed is a time at which the CS service is finished.

Optionally, the CS service is a location update service, a short message service, a called service, or a calling service.

The network device of this embodiment may be configured to execute technical solutions of the following method embodiments of the present invention. Implementation principles and technical effects of the technical solutions are similar, and are not repeated herein.

FIG. 2 is a schematic structural diagram of Embodiment 2 of a network device according to the present invention. As shown in FIG. 2, the network device of this embodiment may include a memory 21 and a processor 22, where the memory 21 is configured to store code that executes a method for identifying a terminal user; and the memory 21 may include a non-volatile memory (Non-volatile Memory). The processor 22 may be a central processing unit (Central Processing Unit, CPU for short), or an application specific integrated circuit (Application Specific Integrated Circuit, ASIC for short), or one or more integrated circuits configured for implementing this embodiment of the present invention. The processor 22 is configured to invoke the code to execute the following operations:
acquiring camping time of a terminal on a first cell of a dedicated network, where the first cell is any cell in the dedicated network; determining a user type of the terminal according to the camping time, where the user type of the terminal is a user of the dedicated network or a user of a public network, the dedicated network is a network that covers a high-speed railway area, the public network is a network that covers an area outside the high-speed railway area, the user of the dedicated network is a user that is on a high-speed train, and the user of the public network is a user that is not on a high-speed train.

Optionally, that the processor 22 is configured to determine the user type of the terminal according to the camping time includes that the processor 22 is specifically configured to: when the camping time is less than preset time, determine that a user of the terminal is a user of the dedicated network; or when the camping time is greater than or equal to the preset time, determine that a user of the terminal is a user of the public network.

Optionally, the processor 22 is further configured to hand over the terminal out of the first cell when determining that the user of the terminal is a user of the public network.

Optionally, the processor 22 is further configured to: before acquiring the camping time of the terminal on the first cell of the dedicated network, acquire a first time point at which the terminal performs the first service interaction with the dedicated network in the first cell; and acquire a second time point at which the terminal performs a current service interaction with the dedicated network; and
that the processor 22 acquires the camping time of the terminal on the first cell of the dedicated network includes that the processor 22 uses a time difference between the second time point and the first time point as the camping time.

Optionally, the processor 22 is further configured to: before acquiring the camping time of the terminal on the first cell of the dedicated network, acquire a first identifier of the first cell when the terminal performs the first service interaction with the dedicated network in the first cell; and acquire a second identifier of a cell in which the terminal performs the current service interaction with the dedicated network; and
that the processor 22 is configured to acquire the camping time of the terminal on the first cell of the dedicated network includes that the processor 22 is specifically configured to acquire the camping time of the terminal on the first cell when it is determined that the first identifier and the second identifier are the same.

Optionally, the processor 22 is further configured to: when it is determined that the first identifier and the second identifier are different, determine that the user of the terminal is a user of the dedicated network.

Optionally, the processor 22 is further configured to: after determining that the user of the terminal is a user of the dedicated network, use a time at which the terminal performs the current service interaction with the dedicated network as a time at which the terminal performs the first service interaction with the dedicated network in a cell corresponding to the second identifier.

Optionally, when a service is a PS service, a time at which the service interaction is performed is a time at which the PS service is started; and when the service is a CS service, the time at which the service interaction is performed is a time at which the CS service is finished.

Optionally, the CS service is a location update service, a short message service, a called service, or a calling service.

FIG. 3 is a flowchart of Embodiment 1 of a method for identifying a terminal user according to the present invention. As shown in FIG. 3, this embodiment is performed by a network device, and the method of this embodiment may include:
S101. Acquire camping time of a terminal on a first cell of a dedicated network, where the first cell is any cell in the dedicated network.
S102. Determine a user type of the terminal according to the camping time, where the user type of the terminal is a user of the dedicated network or a user of a public network, the dedicated network is a network that covers a high-speed railway area, the public network is a network that covers an area outside the high-speed railway area, the user of the dedicated network is a user that is on a high-speed train, and the user of the public network is a user that is not on a high-speed train.

In this embodiment, the dedicated network is the network that covers a high-speed railway area. A coverage area of the dedicated network may be divided into multiple cells, and any one of the cells is used as an example for description, where the any one of the cells is referred to as a first cell herein. If a terminal camps in the first cell, camping time of the terminal on the first cell may be acquired, and then it is determined, according to the camping time of the terminal, whether a user type of a user that uses the terminal is a user of the dedicated network or a user of the public network, where the public network is the network that covers an area outside a high-speed railway area, that is, it is determined whether the user of the terminal is a user that is on the high-speed train or a user that is not on the high-speed train.

A speed of the high-speed train is high, and a moving speed of a user that is on the high-speed train is high. Therefore, camping time of the user that is on the high-speed train in the first cell is relatively short. Moreover, a user that is not on the high-speed train is in a stopped state or moves at a low speed, which inevitably causes that camping time of the user in the first cell is relatively long. Therefore, a comparison relationship between camping time of a terminal and preset time (for example, 25 minutes) may be determined: when the camping time is less than the preset time, it indicates that time during which the terminal camps in the first cell is relatively short, and therefore it is determined that a user of the terminal is a user of the dedicated network; and when the camping time is greater than or equal to the preset time, it indicates that the time during which the terminal camps in the first cell is relatively long, and therefore it is determined that the user of the terminal is a user of the public network.

In this embodiment of the present invention, camping time of a terminal on a first cell of a dedicated network is acquired, where the first cell is any cell in the dedicated network, and then it is determined, according to the camping time, whether a user type of the terminal is a user of the dedicated network or a user of a public network. Determining a user type of a terminal by using camping time does not need to depend on a report from a base station, and may determine in time whether the terminal is a user of the public network. Therefore, a network congestion problem of the dedicated network is resolved in time.

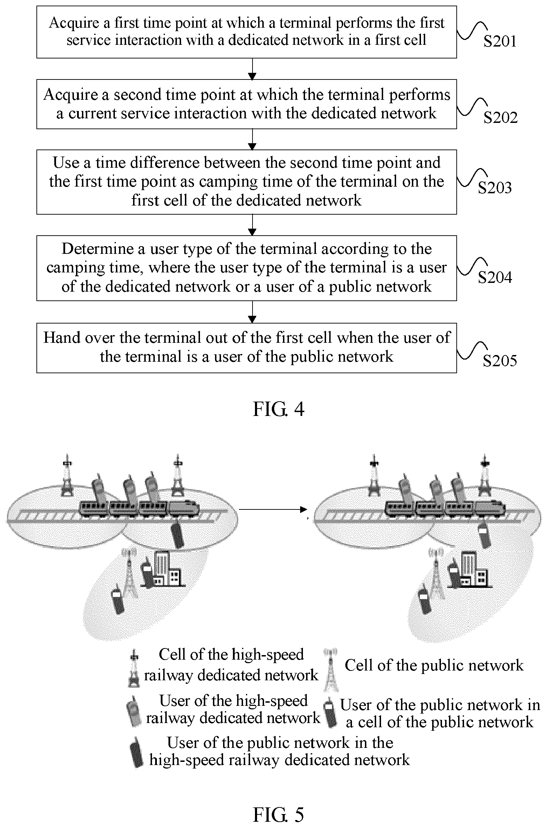

FIG. 4 is a flowchart of Embodiment 2 of a method for identifying a terminal user according to the present invention. As shown in FIG. 4, this embodiment is performed by a network device, and the method of this embodiment may include:
S201. Acquire a first time point at which a terminal performs the first service interaction with a dedicated network in a first cell.
   In this embodiment, if the terminal enters the first cell and performs the first service interaction with the dedicated network in the first cell, a time at which the terminal performs the service interaction with the dedicated network is acquired, where the time is referred to as the first time point, and the first time point is a time point and may also be referred to as a time at which the terminal enters the first cell.
S202. Acquire a second time point at which the terminal performs a current service interaction with the dedicated network.
   In this embodiment, after the service interaction that is described in S201 and performed by the terminal and the dedicated network is completed, if currently, a service interaction is further being performed by the terminal and the dedicated network, a time at which the terminal performs the current service interaction with the dedicated network is acquired, where the time is referred to as a second time point, and the second time point is also a time point and may also be referred to as a time at which the terminal performs a current service.
S203. Use a time difference between the second time point and the first time point as camping time of the terminal on the first cell of the dedicated network.
   In this embodiment, that all cells in which the terminal performs service interactions with the dedicated network are the first cell is used as an example. After the first time point and the second time point are acquired, a subtraction is performed between the second time point and the first time point, the time difference between the second time point and the first time point can be acquired, and the time difference is used as camping time during which the terminal camps in the first cell.
S204. Determine a user type of the terminal according to the camping time, where the user type of the terminal is a user of the dedicated network or a user of a public network.
   In this embodiment, a specific implementation process of S204 is similar to a specific implementation process of S102 in Embodiment 1 of the method according to the present invention. For details, reference may be made to related records in the foregoing method embodiment of the present invention, and details are not described herein again.
S205. Hand over the terminal out of the first cell when the user of the terminal is a user of the public network.

In this embodiment, if the user type of the terminal determined in S204 is a user of the dedicated network, a procedure is finished; and if the user type of the terminal determined in S204 is a user of the public network, S205 may further be executed. When the terminal performs a service interaction with the dedicated network, the terminal occupies network resources of the dedicated network. However, when the terminal is located in the first cell and does not perform a service interaction with the dedicated network, the terminal occupies less network resources of the dedicated network, and impact on network congestion of the dedicated network is not large. Therefore, in this embodiment, a time interval between two service interactions that are performed by the terminal and the dedicated network is used as the camping time. When it is determined that the user of the terminal is a user of the public network, the user of the public network is handed over out of the first cell as shown in FIG. 5, so as to release network resources occupied by the terminal on the dedicated network. Therefore, network congestion of the first cell that is caused by occupation of the network resources by the user of the public network is avoided.

In this embodiment, a public network neighboring cell may be planned for the first cell. When it is determined that the user of the terminal is a user of the public network, the terminal is handed over to the public network neighboring cell. Specifically, a frequency of the public network neighboring cell of the first cell may be sent to the terminal, the terminal performs measurement on the frequency and reports a measurement report, and then the terminal is handed over to a public network neighboring cell with good network quality according to the measurement report reported by the terminal.

In this embodiment, camping time of a terminal on a first cell of a dedicated network is acquired, where the first cell is any cell in the dedicated network, and then it is determined, according to the camping time, whether a user type of the terminal is a user of the dedicated network or a user of a public network. When a user of the terminal is a user of the public network, the terminal is handed over out of the first cell. Determining a user type of a terminal by using camping time does not need to depend on a report from a base station, and may determine in time whether the terminal is a user of the public network, and the user of the public network may be handed over out of the first cell in time. Therefore, a network congestion problem of the dedicated network is resolved in time.

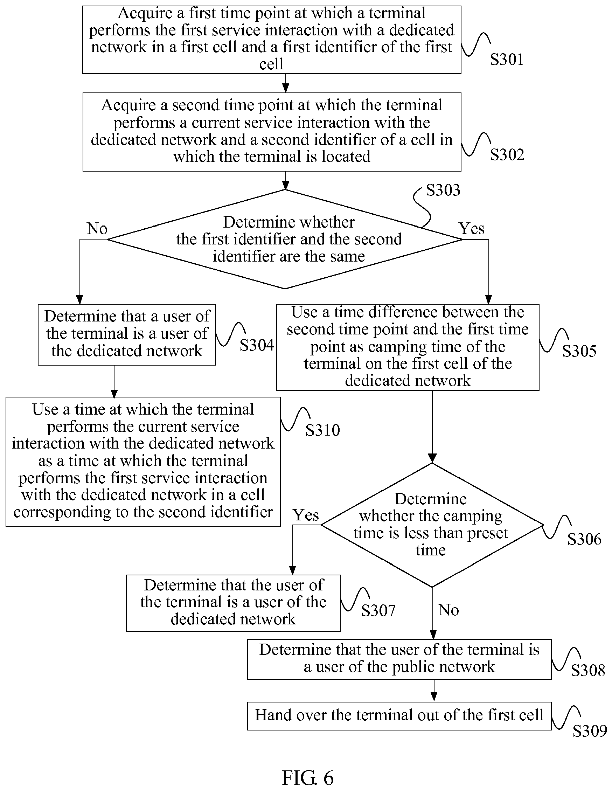

FIG. 6 is a flowchart of Embodiment 3 of a method for identifying a terminal user according to the present invention. As shown in FIG. 6, this embodiment is performed by a network device, and the method of this embodiment may include:
S301. Acquire a first time point at which a terminal performs the first service interaction with a dedicated network in a first cell and a first identifier of the first cell.
   In this embodiment, if the terminal enters the first cell and performs the first service interaction with the dedicated network in the first cell, a time at which the terminal performs the service interaction with the dedicated network, and an identifier of the first cell in which the terminal is located are acquired, where the time is referred to as the first time point, the identifier of the first cell is referred to as the first identifier, and the first time point may also be referred to as a time at which the terminal enters the first cell.
S302. Acquire a second time point at which the terminal performs a current service interaction with the dedicated network and a second identifier of a cell in which the terminal is located.
   In this embodiment, after the service interaction that is described in S301 and performed by the terminal and the dedicated network is completed, if currently, a service interaction is further being performed by the terminal with the dedicated network, a time at which the terminal performs the current service interaction with the dedicated network and the identifier of the cell in which the terminal is located are acquired, where the time is referred to as the second time point, the identifier of the cell in which the terminal is currently located is referred to as the second identifier, the cell in which the terminal is currently located and the first cell may be the same, or may be different, and the second time point may also be referred to as a time at which the terminal performs a current service.
S303. Determine whether the first identifier and the second identifier are the same. If no, execute S304, and if yes, execute S305.
   In this embodiment, after the first identifier and the second identifier are acquired, it is determined whether the first cell and the cell in which the terminal is located when the terminal performs the current service interaction with the dedicated network are a same cell. If it is determined that the first identifier and the second identifier are different, it indicates that the first cell and the cell in which the terminal is located when the current service interaction is performed with the dedicated network are not a same cell, and then S304 is executed; and if it is determined that the first identifier and the second identifier are the same, it indicates that the first cell and the cell in which the terminal is located when the terminal performs the current service interaction with the dedicated network are the same cell, and then S305 is executed.
S304. Determine that a user of the terminal is a user of the dedicated network.
   In this embodiment, when the first identifier and the second identifier are different, it indicates that the terminal is not located in the first cell currently, that is, the terminal does not always stay in a same cell, but is in a moving process. Therefore, it may be determined that the user of the terminal is a user of the dedicated network.
S305. Use a time difference between the second time point and the first time point as camping time of the terminal on the first cell of the dedicated network.
S306. Determine whether the camping time is less than preset time. If yes, execute S307, and if no, execute S308.
S307. Determine that the user of the terminal is a user of the dedicated network.
S308. Determine that the user of the terminal is a user of the public network.
S309. Hand over the terminal out of the first cell.

In this embodiment, for specific implementation processes of S305 to S309, reference may be made to related records in S203 to S205 in Embodiment 2 of the method according to the present invention, and details are not described herein again.

Optionally, in order to improve accuracy of identifying a user of the public network, S302 and S303 may further be executed after S307 is executed. A user of the public network may quickly perform a service interaction with the dedicated network again after performing the first service interaction with the dedicated network in the first cell. Therefore, a user of the public network may be accurately identified by using the foregoing cyclic manner.

Optionally, after S304 is executed, this embodiment may include:
S310. Use a time at which the terminal performs the current service interaction with the dedicated network as a time at which the terminal performs the first service interaction with the dedicated network in a cell corresponding to the second identifier.

In this embodiment, in order to improve accuracy of identifying a user of the public network, when it is determined that a current terminal has entered another cell (for example, a second cell) that is different from the first cell, a time at which the current terminal performs a service interaction with the dedicated network may be used as a time at which the terminal performs the first service interaction with the second cell, where the second identifier is an identifier of the second cell. After the first service interaction performed by the terminal and the dedicated network in the second cell is completed, a third time at which the terminal performs a current service interaction with the dedicated network and a third identifier of a cell in which the terminal is located may further be acquired, and then it is determined whether the second identifier and the third identifier are the same; if no, it is determined that a user of the terminal is a user of the dedicated network, and if yes, a time difference between the third time and the second time point is used as camping time of the terminal on the second cell of the dedicated network, and then it is determined whether the camping time is less than preset time; if yes, it is determined that the user of the terminal is a user of the dedicated network, and if no, it is determined that the user of the terminal is a user of the public network, and the terminal is handed over out of the second cell. A user of the public network is exactly located on an edge of the first cell when performing the first service interaction with the dedicated network in the first cell, and the user of the public network may quickly move to another cell when performing a service interaction with the dedicated network next time. Therefore, a user of the public network may be accurately identified by using the foregoing cyclic manner.

In this embodiment, it is determined whether a cell in which a terminal performs a current service interaction with a dedicated network and a first cell are the same; if they are different, it is determined that a user of the terminal is a user of the dedicated network, and if they are the same, a time difference between a time at which the terminal performs the current service interaction with the dedicated network and a time at which the first service interaction is performed in the first cell is used as camping time, and then it is determined, according to the camping time, whether a user type of the terminal is a user of the dedicated network or a user of a public network; when the user of the terminal is a user of the public network, the terminal is handed over out of the first cell. Determining a user type of a terminal by using camping time does not need to depend on a report from a base station, and may determine in time whether the terminal is a user of the public network, and the user of the public network may be handed over out of the first cell in time. Therefore, a network congestion problem of the dedicated network is resolved in time.

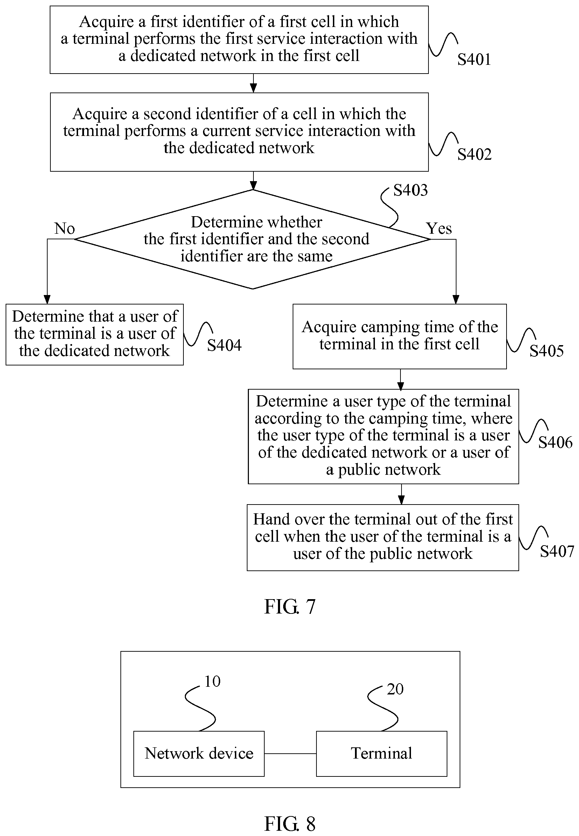

FIG. 7 is a flowchart of Embodiment 4 of a method for identifying a terminal user according to the present invention. As shown in FIG. 7, this embodiment is performed by a network device, and the method of this embodiment may include:
S401. Acquire a first identifier of a first cell in which a terminal performs the first service interaction with a dedicated network in the first cell.
S402. Acquire a second identifier of a cell in which the terminal performs a current service interaction with the dedicated network.
S403. Determine whether the first identifier and the second identifier are the same. If no, execute S404, and if yes, execute S405.
S404. Determine that a user of the terminal is a user of the dedicated network.
   In this embodiment, for specific implementation processes of S401 to S404, reference may be made to related records in S301 to S303 in Embodiment 3 of the method according to the present invention, and details are not described herein again.
S405. Acquire camping time of the terminal on the first cell.
S406. Determine a user type of the terminal according to the camping time, where the user type of the terminal is a user of the dedicated network or a user of a public network.
   In this embodiment, for specific implementation processes of S405 and S406, reference may be made to related records in Embodiment 1 of the method according to the present invention or related records in S201 to S204 in Embodiment 2 of the method according to the present invention, and details are not described herein again.
S407. Hand over the terminal out of the first cell when the user of the terminal is a user of the public network.

In this embodiment, for a specific implementation process of S407, reference may be made to a related record in S205 in Embodiment 2 of the method according to the present invention, and details are not described herein again.

In this embodiment, the user type of the terminal is determined by means of whether the cell in which the terminal performs the current service interaction with the dedicated network and the first cell are the same, and/or the camping time of the terminal on the first cell, which does not need to depend on a report from a base station, and may determine in time whether the terminal is a user of the public network, and the user of the public network may be handed over out of the first cell in time. Therefore, a network congestion problem of the dedicated network is resolved in time.

On the basis of the foregoing method embodiments of the present invention, optionally, a service in the foregoing mentioned service interaction performed by the terminal and the dedicated network may be a packet switched (Packet Switching, PS for short) service, where a time at which the service interaction is performed is a time at which the PS service is started. PS services are relatively unified in operation. Therefore, the time is acquired when the PS service is started (that is, when the service is established), and the time is used as the time at which the service interaction is performed. The time at which the service is started may refer to: a time at which uplink and downlink temporary block flows (Temporary Block Flow, TBF for short) are successfully established after an assignment is completed. The PS service may be an upload service, a download service, or the like.

On the basis of the foregoing method embodiments of the present invention, optionally, a service in the foregoing mentioned service interaction performed by the terminal and the dedicated network may be a circuit switched (Circuit Switch, CS for short) service, where a time at which the service interaction is performed is a time at which the CS service is finished. Procedures of various CS services are different. Therefore, for unified processing, the time is uniformly acquired when the service is finished (that is, when the service is released), and the time is used as the time at which the service interaction is performed. The time at which the service is finished may refer to: a time at which a CLR CMD is received from a core network. The CS service may be a location update service, a calling service, a called service, or a short message service.

It should be noted that, a service in the first service interaction performed by the foregoing terminal and the dedicated network in the first cell is a PS service, and a service in a service interaction currently performed by the terminal and the dedicated network may be a PS service or a CS service; or a service in the first service interaction performed by the foregoing terminal and the dedicated network in the first cell is a CS service, and a service in a service interaction currently performed by the terminal and the dedicated network may be a PS service or a CS service; that is, the service in the first service interaction performed by the terminal and the dedicated network in the first cell and the service in the service interaction currently performed by the terminal and the dedicated network may be a same service, or may be different services.

FIG. 8 is a schematic structural diagram of an embodiment of a system for identifying a terminal user according to the present invention. As shown in FIG. 8, the system of this embodiment includes: a network device 10 and at least one terminal 20, where the network device 10 communicates with and connects to the at least one terminal 20. Only one terminal 20 is shown in FIG. 8. The network device 10 may use a structure of an embodiment of a network device shown in FIG. 1 or FIG. 2, and correspondingly, may execute technical solutions of the foregoing method embodiments of the present invention. Implementation principles and technical effects of the technical solutions are similar and are not described herein again.

Persons of ordinary skill in the art may understand that all or some of the steps of the method embodiments may be implemented by a program instructing relevant hardware. The program may be stored in a computer-readable storage medium. When the program runs, the steps of the method embodiments are performed. The foregoing storage medium includes: any medium that can store program code, such as a read-only memory (English: Read-Only Memory, ROM for short), a random access memory (English: Random Access Memory, RAM for short), a magnetic disk, or an optical disc.

Finally, it should be noted that the foregoing embodiments are merely intended for describing the technical solutions of the present invention, but not for limiting the present invention. Although the present invention is described in detail with reference to the foregoing embodiments, persons of ordinary skill in the art should understand that they may still make modifications to the technical solutions described in the foregoing embodiments or make equivalent replacements to some or all technical features thereof, without departing from the scope of the technical solutions of the embodiments of the present invention.

## Claims

1. A network device, comprising:
an acquiring unit, configured to acquire camping time of a terminal on a first cell of a dedicated network, wherein the first cell is any cell in the dedicated network; and
a processing unit, configured to determine a user type of the terminal according to the camping time, wherein the user type of the terminal is a user of the dedicated network or a user of a public network, the dedicated network is a network that covers a high-speed railway area, the public network is a network that covers an area outside the high-speed railway area, the user of the dedicated network is a user that is on a high-speed train, and the user of the public network is a user that is not on a high-speed train.

2. The network device according to claim 1, wherein the processing unit is specifically configured to: when the camping time is less than preset time, determine that a user of the terminal is a user of the dedicated network; or
when the camping time is greater than or equal to the preset time, determine that a user of the terminal is a user of the public network.

3. The network device according to claim 2, wherein the processing unit is further configured to hand over the terminal out of the first cell when determining that the user of the terminal is a user of the public network.

4. The network device according to any one of claims 1 to 3, wherein the acquiring unit is further configured to: before acquiring the camping time of the terminal on the first cell of the dedicated network, acquire a first time point at which the terminal performs the first service interaction with the dedicated network in the first cell; and acquire a second time point at which the terminal performs a current service interaction with the dedicated network; and
that an acquiring unit, configured to acquire camping time of a terminal on a first cell of a dedicated network comprises that the acquiring unit is specifically configured to use a time difference between the second time point and the first time point as the camping time.

5. The network device according to claim 4, wherein the acquiring unit is further configured to: before acquiring the camping time of the terminal on the first cell of the dedicated network, acquire a first identifier of the first cell when the terminal performs the first service interaction with the dedicated network in the first cell; and acquire a second identifier of a cell in which the terminal performs the current service interaction with the dedicated network; and
that an acquiring unit, configured to acquire camping time of a terminal on a first cell of a dedicated network comprises that the acquiring unit is specifically configured to acquire the camping time of the terminal on the first cell when the first identifier and the second identifier are the same.

6. The network device according to claim 5, wherein the processing unit is further configured to: when it is determined that the first identifier and the second identifier are different, determine that the user of the terminal is a user of the dedicated network.

7. The network device according to claim 6, wherein the processing unit is further configured to: after determining that the user of the terminal is a user of the dedicated network, use a time at which the terminal performs the current service interaction with the dedicated network as a time at which the terminal performs the first service interaction with the dedicated network in a cell corresponding to the second identifier.

8. The network device according to any one of claims 4 to 7, wherein when a service is a packet switched PS service, a time at which the service interaction is performed is a time at which the PS service is started; and
when the service is a circuit switched CS service, the time at which the service interaction is performed is a time at which the CS service is finished.

9. The network device according to claim 8, wherein the CS service is a location update service, a short message service, a called service, or a calling service.

10. A method for identifying a terminal user, comprising:
acquiring camping time of a terminal on a first cell of a dedicated network, wherein the first cell is any cell in the dedicated network;
determining a user type of the terminal according to the camping time, wherein the user type of the terminal is a user of the dedicated network or a user of a public network, the dedicated network is a network that covers a high-speed railway area, the public network is a network that covers an area outside the high-speed railway area, the user of the dedicated network is a user that is on a high-speed train, and the user of the public network is a user that is not on a high-speed train.

11. The method according to claim 10, wherein the determining a user type of the terminal according to the camping time comprises:
when the camping time is less than preset time, determining that a user of the terminal is a user of the dedicated network; or
when the camping time is greater than or equal to the preset time, determining that the user of the terminal is a user of the public network.

12. The method according to claim 11, further comprising:
handing over the terminal out of the first cell when the user of the terminal is a user of the public network.

13. The method according to any one of claims 10 to 12, wherein before the acquiring camping time of a terminal on a first cell of a dedicated network, the method further comprises: acquiring a first time point at which the terminal performs the first service interaction with the dedicated network in the first cell; and acquiring a second time point at which the terminal performs a current service interaction with the dedicated network; and
the acquiring camping time of a terminal on a first cell of a dedicated network comprises: using a time difference between the second time point and the first time point as the camping time.

14. The method according to claim 13, wherein before the acquiring camping time of a terminal on a first cell of a dedicated network, the method further comprises: acquiring a first identifier of the first cell when the terminal performs the first service interaction with the dedicated network in the first cell; and acquiring a second identifier of a cell in which the terminal performs the current service interaction with the dedicated network; and
the acquiring camping time of a terminal on a first cell of a dedicated network comprises: acquiring the camping time of the terminal on the first cell when the first identifier and the second identifier are the same.

15. The method according to claim 14, further comprising:
when the first identifier and the second identifier are different, determining that the user of the terminal is a user of the dedicated network.

16. The method according to claim 15, wherein after the determining that the user of the terminal is a user of the dedicated network, the method further comprises:
using a time at which the terminal performs the current service interaction with the dedicated network as a time at which the terminal performs the first service interaction with the dedicated network in a cell corresponding to the second identifier.

17. The method according to any one of claims 13 to 16, wherein when a service is a packet switched PS service, a time at which the service interaction is performed is a time at which the PS service is started; and
when the service is a circuit switched CS service, the time at which the service interaction is performed is a time at which the CS service is finished.

18. The method according to claim 17, wherein the CS service is a location update service, a short message service, a called service, or a calling service.

19. A system for identifying a terminal user, comprising: the network device according to any one of claims 10 to 18 and at least one terminal, wherein the network device communicates with and connects to the at least one terminal.
